# EUROPEAN PATENT SPECIFICATION

(11) **EP 1 699 247 B1**
(45) Date of publication and mention of the grant of the patent: **05.05.2010**
(21) Application number: 04802469.9
(22) Date of filing: 15.12.2004
(51) Int. Cl.: H04L 12/56

(54) **MULTIPLE ISP LOCAL AREA NETWORK EGRESS SELECTING METHOD**
VERFAHREN ZUR AUSWAHL EINES MEHRFACH-ISP-LOKALNETZ-AUSGANGS
PROCEDE DE CHOIX DE SORTIE D'UN RESEAU LOCAL A FAI MULTIPLES

(30) Priority: 19.12.2003 CN 200310123979
(43) Date of publication of application: 06.09.2006
(73) Proprietor: Huawei Technologies Co., Ltd., Longgang District, Shenzhen, Guangdong Province 518129 (CN)
(72) Inventor: CHEN, Zhen c/o Int. Prop.Dept.,, Shenzhen, Guangdong Province 518129 (CN); HUANG, He, Shenzhen, Guangdong 518129 (CN)
(74) Representative: Eisenführ, Speiser & Partner
(86) International application number: PCT/CN2004/001456
(87) International publication number: WO 2005/060275

(56) References cited:
- WO-A-03/077143
- WO-A1-01/67258
- WO-A1-02/23822
- CN-A- 1 441 569
- US-A1- 2002 002 615
- US-A1- 2002 046 348
- US-A1- 2003 065 787
- US-A1- 2003 195 984

## Description

### Field of the Invention

The present invention relates to the network routing technology, particularly to a method for selecting egresses of a multi-ISP local area network, and more particularly to a method for selecting access egresses of a local area network connected with multiple ISPs.

### Background of the Invention

For convenient description of the present invention and the prior art, definitions of the following phrases in the Specification are given hereinafter:
NAT: Network Address Translation;
ISP: Internet Service Provider; and
Host route: a corresponding 32-bit mask item of a host directly connected with a network device in a routing table. The Address Resolution Protocol (ARP) corresponds to each 32-bit mask item.

In general, a campus network is usually configured with multiple network egresses to connect with Internet access providers. The multiple network egresses are backups for each other and perform load sharing so as to improve the bandwidth and the robustness for the communication between the campus network and the external network, which is common in school networks. Usually a school network accesses a public operator and an education network.

Furthermore, due to the serious shortage of IP addresses currently, the campus network uses IP addresses in private networks and accesses the Internet through NAT. Since different access providers provide different policies of access accounting and flow control, it is necessary to perform NAT multi-egress policy control on the outgoing traffic of the campus network. Under the NAT multi-egress policy control, it is possible to select an ISP egress in accordance with source information and destination information of subscriber packets to save the charge for access and implement hierarchy management of subscribers. For example, in the school network, the charge for abroad traffic is lower by accessing the public operator (e.g., the Telecom) than by accessing the education network. In contrast, access to the education network for domestic traffic can effectively save charge, since the education network does not charge for domestic traffic. Therefore, it is necessary to perform NAT multi-egress policy control, i.e., an egress of the education network is selected for domestic traffic and an egress of the public operator is selected for abroad traffic, and both of the egresses shall be backups for each other so that all traffic will be switched to one egress when the other fails.

Currently, there is not a satisfactory solution used in predominant core routing switches for the NAT multi-egress policy control in the industry. Generally, the following solution is adopted in the industry to implement NAT multi-egress policy control:

Network is built up with multiple routers, one of which performs stream classification on the packets in accordance with source information and destination information of the packets, and the classified packets are transferred to the other routers, which perform NAT operations for the NAT multi-egress policy control.

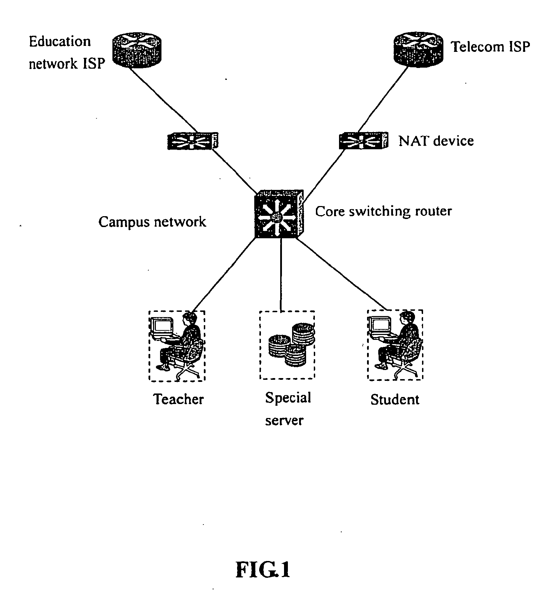

FIG.1 is a principle diagram of networking of a multi-ISP campus network in the prior art. It provides the NAT multi-egress policy control function by utilizing a core switch and multiple dedicated NAT devices. This networking can provide the NAT multi-egress policy control function, and the dedicated NAT devices in hardware perform NAT operation to ensure the bandwidth. However, it is required to add the dedicated NAT devices, i.e., each ISP egress needs to be equipped with a dedicated NAT device, resulting in increased cost of networking and increased failure points.

Furthermore, as described above, the NAT multi-egress policy control function is implemented by the hybrid networking for the multiple devices, so that the core routing switch can not sense the failure of a NAT device when the NAT device at any ISP egress fails, resulting in stream interruption at the ISP egress, and therefore it is necessary to manually modify the complicated stream classification policy to achieve backup of the multiple ISP egresses.
US 2003/065787 A1 discloses a method to provide data communication service, which enables each service provider to provide each user with both contents service and Internet connection service. The method of US 2003/065787 A1 provides an Internet service provider with an AT-GW 341 used to authenticate the user, hold a network address assigned to the user, and translate a network address, which is different from a network address held by the user, thereby establishing communication between the user computer and the Internet service provider. The configuration of the US 2003/065787 A1 thus enables the user to receive high quality contents service and Internet connection service provided from a communication enterprise concurrently.
According to WO 03/077143 A1, a communications system and method is provided that includes multiple networked devices connected in a local area network and connected, via a gateway having enhanced functionality, to a wide area network such as the Internet using one or more Internet service providers. The system of WO 03/077143 A1 includes a source routing device, at least two networked customer premise equipment devices, a gateway for controlling communication between the source routing device and the customer premise equipment devices and an address server for providing the gateway with at least two dynamically assigned Internet protocol addresses corresponding to different Internet service providers to enable each of the customer premise equipment devices to establish simultaneous connections with the different Internet service providers.
US 2002/056348 A1 is related to Linux's NAT (Network Address Translator) implementation, IP Masquerade, which includes a VPN Masquerade feature that provides interoperation of NAT with IKE and ESP tunnel mode within the IPSec security protocol suite. VPN Masquerade uses heuristics to route packets from a server on the Internet to a client on a local network that shares access to the Internet with other clients over a common access link through a router running NAT. VPN Masquerade, however, is susceptible to crashes, collisions and race conditions that can disable IPSec communication. These are prevented, or recovery from such is automatically effected, by sending over a tunnel a control packet, a "ping", from the client at one end of the tunnel to the server at the other end of the tunnel, and then waiting to send any packets other than a control packet over the tunnel until a responsive control packet is received from the server. The tunnel is defined by an epoch that comprises one security association (SA) in each direction that has a negotiated limited lifetime and defines the use of the ESP protocol in tunnel mode with negotiated authentication and/or encryption keys and a security parameters index (SPI) chosen by the SA's destination. If the client does not receive a response to the "ping" within a predetermined time, then it re-"pings" the server up to a predetermined number of times and, if no response is received, rekeys the tunnel. Further, the client "pings" the server if no packet is received on a tunnel for a predetermined period of time. By also configuring the server to wait to switch to a new epoch until it receives a "ping" from a client, certain race conditions can be eliminated, Alternatively, the client can be configured to ignore an attempt by the server to start a negation for rekeying the tunnel. Automatic recovery from a crash of the NAT is also provided by automatically starting a new IKE session if attempts to rekey a tunnel are not successful.

### Summary of the Invention

An obj ect of the present invention aims to provide a method for selecting egresses of a multi-ISP local area network to solve the problems of increased cost and failure points due to the provision of multiple dedicated NAT devices and to be adapted for the demand of distributed forwarding. It can realize complicated forwarding policy with wire speed and nonblocking, and can also achieve backup for egress links.

An aspect of the present invention provides a method for selecting egresses of a multi-ISP local area network as defined in claim 1.

Preferably, the step of presetting a NAT address pool corresponding to each of the ISP egresses includes the steps of:
binding each of outgoing interfaces connected with the ISP with a corresponding one of the NAT address pools; and
creating a NAT policy tree in accordance with combination of the outgoing interface and the source IP address as a keyword upon request for access, wherein leaf nodes of the NAT policy tree store binding relation between each of outgoing interfaces connected with the ISP and the corresponding NAT address pool and the NAT policy information of the slot number of the NAT board.

Preferably, the step of determining whether it is necessary to perform NAT includes the steps of:
detecting whether there is a public network flag in the routing table item hit by the subscriber traffic; if yes, determining whether one of the leaf nodes of the NAT policy tree is hit in accordance with the combination of the outgoing interface and the source IP address as a keyword; and if one of the leaf nodes of the NAT policy tree is hit, determining it is necessary to perform NAT, otherwise, determining it is unnecessary to perform NAT.

Preferably, the step of selecting one of the NAT address pools corresponding to the ISP egress includes the steps of:
performing matching in the leaf nodes of the policy tree in accordance with the combination of the outgoing interface and the source IP address as a keyword; and
obtaining the address pool and the slot number of the NAT board from the matched leaf node of the policy tree.

Preferably, the created NAT policy tree may be a binary tree.

Preferably, the step of determining whether the policy route is available includes the steps of:
querying in the routing table in accordance with the next hop of the policy route; and determining whether the next hop can hit the 32-bit mask route corresponding to a directly-connected host; and if yes, determining the policy route is available, otherwise, determining the policy route is unavailable.

Preferably, the step of determining a next hop of the route for the packet includes the step of:
determining whether the route corresponds to a plurality of next hops; and if yes, performing traffic sharing by the plurality of corresponding ISPs.

Preferably, the routing switch includes a routing module and a NAT module completely separated from each other, wherein the routing module determines route egress for the subscriber traffic; the NAT module determines whether to perform NAT and which NAT address pool to be selected.

In accordance with the source IP address, the outgoing interface, the general route and the policy router, the embodiments of the present invention determine whether it is necessary to perform NAT for packet forwarding and determine the binding relation between the address pools and the outgoing interfaces, and add the NAT strategy tree describing the binding relation with the address pool. Moreover, the routing module is separated from the NAT module so as to meet the demand of distributed forwarding, implementing complicated forwarding policy and wire speed and nonblocking forwarding.

### Brief Description of the Drawing

FIG.1 is a networking principle diagram of a conventional multi-ISP campus network;

FIG.2 is a flow diagram of a NAT multi-ISP policy forwarding according to an embodiment of the present invention; and

FIG.3 is a flow diagram showing the NAT policy forwarding with reference to a particular device according to the other embodiment of the present invention.

### Detailed Description of the Embodiments

The key of the preferred embodiments of the present invention lies in that a NAT policy table is added in the forwarding plane where NAT policy control is directly performed when forwarding the data stream, so that the core routing switch can not only accomplish the complicated NAT policy control, but also take advantage of high performance of the distributed forwarding plane. Thus, the core routing switch at the core position of the campus network can independently provide the NAT policy function, resulting in simplification of the network.

The following two major technical problems can be solved by addition of the NAT policy table to realize the NAT policy function:

1. It enables selection of ISP egresses in accordance with subscriber source information and outgoing interface information, flexible accounting and flow control policy can be implemented in combination with multiple ISPs, and the charge for outgoing traffic of subscribers can be saved.

2. It enables hot backup among the multiple ISP egresses, i.e. , automatically and rapidly switching to another ISP egress without any manual intervention upon detection of a failed ISP egress.

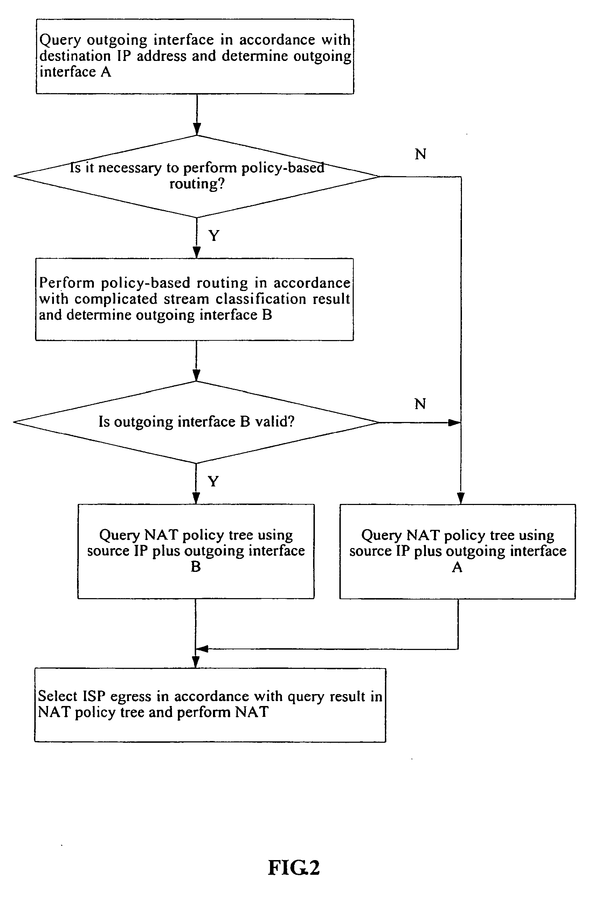

FIG.2 is a flow diagram of NAT multi-ISP policy forwarding according to a preferred embodiment of the present invention. The NAT policy table is added in the forwarding plane. The policy table is stored in a tree form. The index of the table is the source IP address plus the outgoing interface, and the content in the items of the table is bound ISP egress information including address pool, restriction on the number of links, etc. During the forwarding, query is performed in the routing table and the policy route, and performs query in the NAT policy table, obtains ISP egress information and performs the NAT according to the obtained ISP egress information. When the ISP egress fails, selecting an available ISP automatically to achieve hot backup among the multiple ISPs.

The forwarding steps will be described in detail as follows:

1. A forwarding outgoing interface A is determined for a packet by querying in the routing table in accordance with the destination IP address of the packet;

2. The flow determines whether it is necessary to perform policy routing in accordance with system configuration information, and if unnecessary, the flow performs query in the NAT policy tree by using the source IP address plus the outgoing interface A, and then jumps to step 5; if necessary, the flow executes step 3;

3. An outgoing interface B is determined for the packet by performing policy routing in accordance with the result of complicated stream classification;

4. The flow determines whether the outgoing interface B is valid, and if the outgoing interface B is valid, the flow performs query in the policy tree by using the source IP address plus the outgoing interface B; if the outgoing interface B is invalid, the flow performs query in the policy tree by using the source IP address plus the outgoing interface A; and

5. An ISP egress is selected in accordance with the query result of the NAT policy tree, the NAT operation is performed on the packet, and the packet is sent out over the link corresponding to selected ISP egress.

The backup of the multiple ISP egresses may be implemented by the following two means:

1. As for the policy route, an outgoing interface of the general route will be utilized automatically if the outgoing interface of the policy route is invalid.

2. As for the general route, if the outgoing interface of the general route is invalid, the route processing system of the core routing switch will automatically perform route recalculation, select a new route, and distribute the new route in the routing table, so as to achieve the backup of multiple ISP egresses.

In order to meet the controllability requirement on devices in the campus network connected with multiple ISP egresses in case of hybrid networking with multiple address spaces, the policy NAT in the preferred embodiment of the present invention will realize the following three critical functions:

A. The outgoing egress for subscriber traffic should not be determined merely by the general route. The improved policy route has to be completed and the backup must be implemented for the policy route through the general route.

B. The following requirements must be met: subscribers within one private network can access the public network via egresses provided by different ISPs; and when one subscriber in the private network accesses the public network via different egresses, the address of the subscriber in the private network can be translated into an address in the public network in different address pools, i.e., the NAT must be performed by the address pool bound with the egress when the address space of the subscriber is not consistent with his egress space.

C. The routing module is completely separated from the NAT module: the routing module (including the destination address route and the policy route) determines the egress of the subscriber traffic, and the NAT module determines whether to perform NAT and which address pool to select.

In order to attain the object that the egress of the subscriber traffic should not be determined merely in accordance with the general route, the improved policy route must be completed, and the backup must be implemented for the policy route through the general route, the general route is utilized to backup the policy route, i.e., the subscriber traffic will be forwarded automatically in accordance with the general route when the policy route is not available. In the embodiment of the present invention, the next hop of the policy route is searched in the routing table, since the next hop of the available route generally corresponds to a directly-connected host, whether the 32-bit mask route corresponding to the directly-connected host can be hit will be taken as the criterion for determining whether the policy route is available. If the 32-bit mask route corresponding to the directly-connected host can be hit, the policy route is available; if the 32-bit mask route corresponding to the directly-connected host can not be hit, the policy route is invalid and thus the general route is utilized for forwarding.

In order to implement that subscribers in one private network can access the public network via the egresses provided by different ISPs, and that when a subscriber in one private network accesses the public network via different egresses, the address of the subscriber in the private network shall be translated into an address in the public network in different address pools, i.e., the NAT must be performed by the address pool bound with the egress for the subscriber traffic when the address space of the subscriber is not consistent with his egress space, thus the embodiment of the present invention performs translation on different subscriber traffic in accordance with different address pools via different ISP egresses in the embodiment of the present invention. In the embodiment of the present invention, the address pools are not registered in global mode but bound with outgoing interfaces. Meanwhile, in order to identify whether it is necessary to perform NAT and which NAT address pool to be selected, a NAT policy tree is created through combination of the outgoing interface and the source IP address, recording the binding relation of the address pools and the slot number of the distributed dedicated NAT board. Whether there is a public network flag in the routing table item hit by the subscriber traffic is taken as the enablement switch to search in the NAT policy tree. The flag is configured by the subscriber at the outgoing interface connected with an ISP, and any route related with the outgoing interface contains such a public network flag. If using the combination of the outgoing interface and the source IP address as a keyword can hit a leaf of the NAT policy tree, it indicates that it is necessary to perform NAT before the packet is sent out, thus the address pool and the slot number of the NAT board are obtained from the leaf of the NAT policy tree, and the packet is forwarded to the NAT board to process; otherwise, it indicates that the address of the subscriber is an address in the public network, thus the subscriber and the ISP connected herewith pertain to the same address space, therefore, it is unnecessary to perform NAT, and the packet is forwarded to a corresponding ISP egress subscriber board to process in accordance with the route information.

For complete separation of the routing module from the NAT module, the routing module (including the destination address route and the policy route) determines an egress for the subscriber traffic, and the NAT module determines whether to perform NAT and which address pool to be selected. The embodiment of the present invention adopts the complete separation of the routing module from the NAT module to ensure clear logical separation and no influence in function between them, so that there is sufficient space for achieving combination of forwarding logics of various complicated streams from different subscribers.

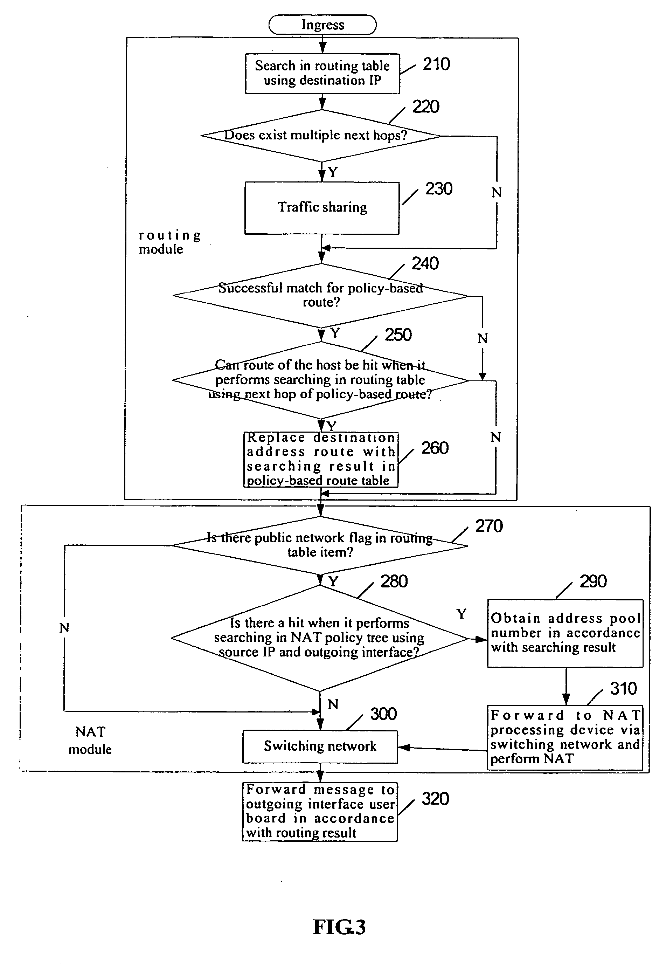

FIG.3 is a flow diagram showing the NAT policy forwarding with reference to a particular device according to another preferred embodiment of the present invention.

In step 210, the flow performs searching in the routing table in accordance with the destination IP address, to determine a possible next hop in accordance with the routing table;

In step 220, the flow determines whether there are multiple next hops according to the searched routing table;

If there are multiple next hops in step 220, the flow performs traffic sharing on the multiple next hops in step 230, and then goes to step 240, where the flow determines whether the policy route is matched successfully;

If the flow determines in step 220 that there is only one next hop, the flow will directly go to step 240, where the flow determines whether the policy route is matched successfully;

If it is determined in step 240 that there is a successful match for the policy route, the flow goes to step 250, where it is determined, by searching in the routing table in accordance with the next hop of the policy route, whether the route of a host can be hit; if it is determined in step 250 that the route of a host can be hit, the flow will go to step 260, where the destination address of the route is covered with the searching result in the policy route. Then the flow goes to step 270, where whether there is a public network flag in the routing table item is determined;

If it is determined in step 240 that there is an unsuccessful match for the policy route, or if it is determined in step 250 that the route of a host can not be hit, the flow will go to step 270;

If it is determined in step 270 that there is a public network flag, goes to step 280, where whether a leaf of the NAT policy tree is hit is determined by searching in the NAT policy tree in accordance with the source IP address and the outgoing interface;

If it is determined in step 280 that a leaf of the NAT policy tree is hit, the flow goes to step 290, where an address pool number is obtained in accordance with the searching result. The packet is in turn forwarded in step 310 via the switching network to the distributed NAT processing device of the NAT board to perform NAT. In step 300, the packet will enter the switching network;

If it is determined in step 270 that there is no public network flag, or if it is determined in step 280 that the route of a host is not hit, the flow will go to step 300 to process via the switching network;

Finally, in step 320, the packet is forward to the egress user board in accordance with the routing result.

The above descriptions are preferred embodiments of the present invention, wherein the described methods are merely for the purpose of exemplification, and not intended to limit the scope claimed for the invention, and all the equivalent variations of the description and the appended drawings shall be included in the scope of claims of the present invention.

## Claims

1. A method for selecting egresses of a multi-ISP local area network, the local area network comprising a routing switch, which comprises an egress user board for processing of the ISP egresses, the method comprising the steps of:
providing a network address translation, further referred as "NAT", board in the routing switch;
presetting a NAT address pool corresponding to each of the ISP egresses;
classifying routes of the local area network into a general route and a policy route, and setting a routing policy for the policy route, wherein the general route is a standby for the policy route;
upon request of an outgoing packet from the local area network, determining a next hop by the general route and determining a next hop by the policy route, and determining (240, 250) whether the next hop determined by the policy route is available; and if available, taking (260) the next hop determined by the policy route as a next hop of the route, otherwise, taking the next hop determined by the general route as the next hop of the route; and
determining (280) whether it is necessary to perform NAT at a ISP egress corresponding to the next hop of the route; and if yes, selecting one (290) of the NAT address pools corresponding to the ISP egress, performing (310) corresponding NAT by the NAT board, and forwarding (320) the packet to the egress user board corresponding to the ISP; otherwise, forwarding (320) the packet to the egress user board corresponding to the ISP.

2. The method for selecting egresses of a multi-ISP local area network according to claim 1, wherein the step of presetting a NAT address pool corresponding to each of the ISP egresses comprises the steps of:
binding each of outgoing interfaces connected with the ISP with a corresponding one of the NAT address pools; and
creating a NAT policy tree in accordance with combination of the outgoing interface and the source IP address as a keyword upon request for access, wherein leaf nodes of the NAT policy tree store binding relation between each of the outgoing interfaces connected with the ISP and the corresponding NAT address pool and the NAT policy information of the slot number of the NAT board.

3. The method for selecting egresses of a multi-ISP local area network according to claim 2, wherein the step of determining (280) whether it is necessary to perform NAT comprises the steps of:
detecting (270) whether there is a public network flag in the routing table item hit by the subscriber traffic;
if yes, determining (280) whether one of the leaf nodes of the NAT policy tree is hit in accordance with the combination of the outgoing interface and the source IP address as a keyword; and
if one of the leaf nodes of the NAT policy tree is hit, determining it is necessary to perform NAT; otherwise, determining it is unnecessary to perform NAT.

4. The method for selecting egresses of a multi-ISP local area network according to claim 2, wherein the step of selecting (290) one of the NAT address pools corresponding to the ISP egress comprises the steps of:
performing matching in the leaf nodes of the policy tree in accordance with the combination of the outgoing interface and the source IP address as a keyword; and
obtaining the address pool and the slot number of the NAT board from the matched leaf node of the policy tree.

5. The method for selecting egresses of a multi-ISP local area network according to claim 2, wherein the created NAT policy tree is a binary tree.

6. The method for selecting egresses of a multi-ISP local area network according to claim 1, wherein the step of determining whether the next hop determined by the policy route is available comprises the steps of:
querying(240) in the routing table in accordance with the next hop determined by the policy route; and
determining (250) whether the next hop determined by the policy route can hit the 32-bit mask route corresponding to a directly-connected host, and if yes, determining the next hop determined by the policy route is available, otherwise, determining the next hop determined by the policy route is unavailable.

7. The method for selecting egresses of a multi-ISP local area network according to claim 1, wherein the step of determining a next hop by the general route comprises the step of:
determining (220) whether the route corresponds to a plurality of next hops; and if yes, performing traffic sharing (230) by the plurality of corresponding ISPs.

8. The method for selecting egresses of a multi-ISP local area network according to claim 1, wherein the routing switch comprises a routing module and a NAT module completely separated from each other, wherein
the routing module determines route egress for the subscriber traffic; and
the NAT module determines whether to perform NAT and which NAT address pool to be selected.

## Patentansprüche

1. Verfahren zum Auswählen von Ausgängen aus einem lokalen Mehrfach-ISP-Netzwerk, wobei das lokale Netzwerk einen Routing-Switch umfasst, der eine Ausgangsbenutzerplatine zum Verarbeiten von ISP-Ausgängen umfasst, wobei das Verfahren die folgenden Schritte umfasst:
Bereitstellen einer Platine zur Netzwerkadressenübersetzung, die im Folgenden als "NAT" bezeichnet wird, in dem Routing-Switch;
Voreinstellen eines NAT-Adressenpools entsprechend jedem der ISP-Ausgänge;
Klassifizieren von Routen des lokalen Netzwerks zu einer allgemeinen Route und einer Richtlinienroute und Einstellen einer Routing-Richtlinie für die Richtlinienroute, wobei die allgemeine Route ein Standby für die Richtlinienroute ist; auf Anforderung eines abgehenden Pakets aus dem lokalen Netzwerk hin Bestimmen eines nächsten Sprungs durch die allgemeine Route und Bestimmen eines nächsten Sprungs durch die Richtlinienroute und Bestimmen (240, 250), ob der nächste durch die Richtlinienroute bestimmte Sprung verfügbar ist; und wenn er verfügbar ist, Nehmen (260) des durch die Richtlinienroute bestimmten nächsten Sprungs als nächsten Sprung der Route, andernfalls Nehmen des durch die allgemeine Route bestimmten nächsten Sprungs als nächsten Sprung der Route; und
Bestimmen (280), ob es notwendig ist, NAT an einem dem nächsten Sprung der Route entsprechenden ISP-Ausgang durchzuführen; wenn ja, Auswählen eines (290) der dem ISP-Ausgang entsprechenden NAT-Adressenpools, Durchführen (310) einer entsprechenden NAT durch die NAT-Platine und Weiterleiten (320) des Pakets zu der dem ISP entsprechenden Ausgangsbenutzerplatine; andernfalls Weiterleiten (320) des Pakets zu der dem ISP entsprechenden Ausgangsbenutzerplatine.

2. Verfahren zum Auswählen von Ausgängen eines lokalen Mehrfach-ISP-Netzwerks nach Anspruch 1, wobei der Schritt des Voreinstellens eines NAT-Adressenpools entsprechend jedem der ISP-Ausgänge die folgenden Schritte umfasst:
Binden jeder der mit dem ISP verbundenen abgehenden Schnittstellen mit einem entsprechenden der NAT-Adressenpools; und
Erzeugen eines NAT-Richtlinienbaums gemäß einer Kombination der abgehenden Schnittstelle und der Quellen-IP-Adresse als ein Schlüsselwort auf eine Zugangsanforderung hin, wobei Blattknoten des NAT-Richtlinienbaums eine Binderelation zwischen jeder der mit dem ISP verbundenen abgehenden Schnittstellen und dem entsprechenden NAT-Adressenpool und den NAT-Richtlinieninformationen der Steckplatznummer der NAT-Platine speichern.

3. Verfahren zum Auswählen von Ausgängen eines lokalen Mehrfach-ISP-Netzwerks nach Anspruch 2, wobei der Schritt des Bestimmens (280), ob es notwendig ist, NAT durchzuführen, die folgenden Schritte umfasst:
Detektieren (270), ob in dem durch den Teilnehmerverkehr getroffenen Routingtabellenposten ein öffentliches-Netzwerk-Flag vorliegt;
wenn ja, Bestimmen (280), ob einer der Blattknoten des NAT-Richtlinienbaums getroffen wird, gemäß der Kombination der abgehenden Schnittstelle und der Quellen-IP-Adresse als ein Schlüsselwort; und
wenn einer der Blattknoten des NAT-Richtlinienbaums getroffen wird, Bestimmen, dass es notwendig ist, NAT durchzuführen; andernfalls Bestimmen, dass es nicht notwendig ist, NAT durchzuführen.

4. Verfahren zum Auswählen von Ausgängen eines lokalen Mehrfach-ISP-Netzwerks nach Anspruch 2, wobei der Schritt des Auswählens (290) eines der NAT-Adressenpools entsprechend dem ISP-Ausgang die folgenden Schritte umfasst:
Durchführen eines Vergleichs in den Blattknoten des Richtlinienbaums gemäß der Kombination der abgehenden Schnittstelle und der Quellen-IP-Adresse als ein Schlüsselwort; und
Erhalten des Adressenpools und der Steckplatznummer der NAT-Platine aus dem verglichenen Blattknoten des Richtlinienbaums.

5. Verfahren zum Auswählen von Ausgängen eines lokalen Mehrfach-ISP-Netzwerks nach Anspruch 2, wobei der erzeugte NAT-Richtlinienbaum ein binärer Baum ist.

6. Verfahren zum Auswählen von Ausgängen eines lokalen Mehrfach-ISP-Netzwerks nach Anspruch 1, wobei der Schritt des Bestimmens, ob der durch die Richtlinienroute bestimmte nächste Sprung verfügbar ist, die folgenden Schritte umfasst:
Anfragen (240) in der Routingtabelle gemäß dem durch die Richtlinienroute bestimmten nächsten Sprung; und
Bestimmen (250), ob der durch die Richtlinienroute bestimmte nächste Sprung die 32-Bit-Maskenroute treffen kann, die einem direkt verbundenen Host entspricht; und wenn ja, Bestimmen, dass der durch die Richtlinienroute bestimmte nächste Sprung verfügbar ist, andernfalls Bestimmen, dass der durch die Richtlinienroute bestimmte nächste Sprung nicht verfügbar ist.

7. Verfahren zum Auswählen von Ausgängen eines lokalen Mehrfach-ISP-Netzwerks nach Anspruch 1, wobei der Schritt des Bestimmens eines nächsten Sprungs durch die allgemeine Route den folgenden Schritt umfasst:
Bestimmen (220), ob die Route einer Vielzahl von nächsten Sprüngen entspricht; und wenn ja, Durchführen von Verkehrs-Sharing (230) durch die Vielzahl von entsprechenden ISP.

8. Verfahren zum Auswählen von Ausgängen eines lokalen Mehrfach-ISP-Netzwerks nach Anspruch 1, wobei der Routing-Switch ein Routing-Modul und ein NAT-Modul umfasst, die völlig voneinander getrennt sind, wobei
das Routing-Modul den Routenausgang für den Teilnehmerverkehr bestimmt; und
das NAT-Modul bestimmt, ob NAT durchzuführen ist und welcher NAT-Adressenpool auszuwählen ist.

## Revendications

1. Procédé de sélection de sorties d'un réseau local à Fournisseurs multiples d'Accès à Internet, FAI, le réseau local comprenant un commutateur de routage qui comporte une carte utilisateur de sorties permettant de traiter les sorties vers des Fournisseurs FAI, le procédé comprenant les étapes consistant à :
fournir une carte de traduction d'adresses de réseau, appelée ensuite « NAT », dans le commutateur de routage,
prérégler un regroupement d'adresses de traduction NAT correspondant à chacune des sorties vers des Fournisseurs d'Accès à Internet,
classer les itinéraires du réseau local en un itinéraire général et en un itinéraire à base de règles, et établir des règles d'acheminement pour l'itinéraire à base de règles, l'itinéraire général représentant un secours pour l'itinéraire à base de règles,
déterminer, à la demande d'un paquet sortant provenant du réseau local, un saut suivant par l'itinéraire général et déterminer un saut suivant par l'itinéraire à base de règles, déterminer également (240, 250) si le saut suivant déterminé par l'itinéraire à base de règles est disponible, et s'il est disponible, suivre (260) le saut suivant déterminé par l'itinéraire à base de règles comme saut suivant de l'itinéraire, sinon prendre le saut suivant déterminé par l'itinéraire général comme saut suivant de l'itinéraire, et
déterminer (280) s'il est nécessaire d'exécuter une traduction NAT au niveau d'une sortie de Fournisseur d'Accès à Internet correspondant au saut suivant de l'itinéraire, et
si c'est le cas, sélectionner (290) l'un des regroupements d'adresses de traduction NAT correspondants à la sortie de Fournisseur d'Accès à Internet, réaliser (310) une traduction NAT correspondante par la carte de traduction NAT et propager (320) le paquet vers la carte utilisateur de sorties correspondant au Fournisseur d'Accès à Internet, sinon, propager (320) le paquet vers la carte utilisateur de sorties correspondant au Fournisseur d'Accès à Internet.

2. Procédé de sélection de sorties d'un réseau local à Fournisseurs multiples d'Accès à Internet, FAI, selon la revendication 1, dans lequel l'étape de préréglage d'un regroupement d'adresses de traduction NAT, correspondant à chacune des sorties de Fournisseurs d'Accès à Internet, comprend les étapes consistant à :
associer chacune des interfaces sortantes reliée au Fournisseur d'Accès à Internet avec un regroupement correspondant faisant partie des regroupements d'adresses de traduction NAT, et
créer un arbre des règles de traduction NAT, conformément à la combinaison de l'interface sortante et de l'adresse source au protocole IP comme mot clé, sur demande pour un accès, les noeuds formant feuille de l'arbre de règles de traduction NAT mémorisant la relation d'association entre chacune des interfaces sortantes reliée au Fournisseur d'Accès Internet, le regroupement d'adresses de traduction NAT correspondant et les informations des règles de traduction NAT du numéro de connecteur de la carte de traduction NAT.

3. Procédé de sélection de sorties d'un réseau local à Fournisseurs multiples d'Accès à Internet, FAI, selon la revendication 2, dans lequel l'étape consistant à déterminer (280) s'il est nécessaire d'exécuter une traduction NAT comprend les étapes consistant à :
détecter (270) s'il existe un indicateur de réseau public dans l'élément de table de routage atteint par le trafic abonné,
si c'est le cas, déterminer (280) si l'un des noeuds formant feuille de l'arbre de règles de traduction NAT est atteint conformément à la combinaison de l'interface sortante et de l'adresse source au protocole IP servant de mot clé, et
si l'un des noeuds formant feuille de l'arbre de règles de traduction NAT est atteint, déterminer qu'il est nécessaire d'exécuter une traduction NAT, sinon déterminer qu'il n'est pas nécessaire d'exécuter une traduction NAT.

4. Procédé de sélection de sorties d'un réseau local à Fournisseurs multiples d'Accès à Internet, FAI, selon la revendication 2, dans lequel l'étape de sélection (290) de l'un des regroupements d'adresses de traduction NAT, correspondant à la sortie vers le Fournisseur d'Accès à Internet, comprend les étapes consistant à :
exécuter une correspondance dans les noeuds formant feuille de l'arbre de règles conformément à la combinaison de l'interface sortante et de l'adresse source au protocole IP servant de mot clé, et
obtenir, du noeud formant feuille correspondant de l'arbre de règles, le regroupement d'adresses et le numéro de connecteur de la carte de traduction NAT.

5. Procédé de sélection de sorties d'un réseau local à Fournisseurs multiples d'Accès à Internet, FAI, selon la revendication 2, dans lequel l'arbre de règles de traduction NAT créé est un arbre binaire.

6. Procédé de sélection de sorties d'un réseau local à Fournisseurs multiples d'Accès à Internet, FAI, selon la revendication 1, dans lequel l'étape consistant à déterminer si le saut suivant, déterminé par l'itinéraire à base de règles, est disponible comprend les étapes consistant à :
effectuer une consultation (240) dans la table de routage conformément au saut suivant déterminé par l'itinéraire à base de règles, et
déterminer (250) si le saut suivant déterminé par l'itinéraire à base de règles peut atteindre l'itinéraire présentant un masque sur 32 bits correspondant à un hôte directement connecté, et si c'est le cas, déterminer que le saut suivant déterminé par l'itinéraire à base de règles est disponible, sinon déterminer que le saut suivant déterminé par l'itinéraire à base de règles n'est pas disponible.

7. Procédé de sélection de sorties d'un réseau local à Fournisseurs multiples d'Accès à Internet, FAI, selon la revendication 1, dans lequel l'étape de détermination d'un saut suivant par l'itinéraire général comprend l'étape consistant à :
déterminer (220) si l'itinéraire correspond à une pluralité de sauts suivants, et si c'est le cas, effectuer un partage de trafic (230) par la pluralité de Fournisseurs d'Accès à Internet correspondants.

8. Procédé de sélection de sorties d'un réseau local à Fournisseurs multiples d'Accès à Internet, FAI, selon la revendication 1, dans lequel le commutateur de routage comprend un module de routage et un module de traduction NAT entièrement séparés l'un de l'autre, dans lequel
le module de routage détermine la sortie d'itinéraire pour le trafic abonné, et
le module de traduction NAT détermine s'il faut exécuter une traduction NAT et quel regroupement d'adresses de traduction NAT sélectionner.
